# EUROPEAN PATENT APPLICATION

(11) **EP 3 919 358 A1**
(43) Date of publication of application: **08.12.2021**
(21) Application number: 21176868.4
(22) Date of filing: 31.05.2021
(51) Int. Cl.: B62J 27/30

(54) **AN ENGINE PROTECTOR OF A STRADDLED VEHICLE AND A STRADDLED VEHICLE WITH AN ENGINE PROTECTOR**

(30) Priority: 04.06.2020 JP 2020097604
(71) Applicant: Yamaha Hatsudoki Kabushiki Kaisha, Iwata-shi, Shizuoka 438-8501 (JP)
(72) Inventor: TERAMOTO, Yoshinori, Shizuoka (JP)
(74) Representative: Grünecker Patent- und Rechtsanwälte PartG mbB

(57) **Abstract**

An engine protector of a straddled vehicle is provided to improve traveling comfort of the straddled vehicle. An engine protector 9 of a straddled vehicle 1 is used for protecting an engine 6 which is mounted to a frame body 22 of the straddled vehicle 1. The engine protector 9 includes a protector portion 40 and a first mounting portion 41. The protector portion 40 is disposed on an outer side than the engine 6 in a vehicle width direction WD. In a vehicle side view, the protector portion 40 is disposed along a direction in which a seat rail 31 of the frame body 22 extends. The protector portion 40 is connected to the first mounting portion 41. The first mounting portion 41 is mounted to the attached portion 27 of the frame body 22 to which the engine 6 is mounted.

## Description

The present invention relates to an engine protector to protect an engine of a straddled vehicle and a straddled vehicle with an engine protector.

A protector, for example, a guard pipe is disclosed in a motorcycle of the prior art (see JP 2013-112293 A). This protector is provided on a vehicle body frame in front of an engine. For example, this protector is provided on the vehicle body frame on an upper side of an axis center of a seat rail. Specifically, this protector is provided on the vehicle body frame so as to extend diagonally upward toward the front of a vehicle body.

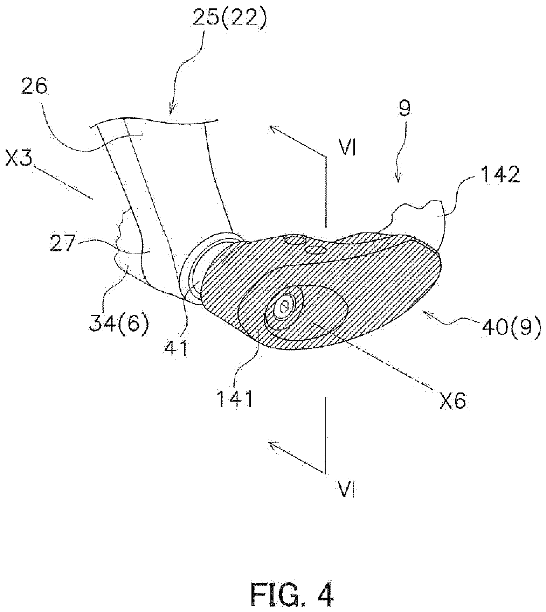

Also, an attachment structure for mounting the protector (a guard pipe) is disclosed in the above prior art (see FIG. 4 of the above prior art). In this mounting structure, the protector is mounted to the vehicle body frame via the support plate.

Here, the vehicle body frame includes a vehicle-component attachment portion for mounting an engine body. The support plate is used for looking as if the protector is mounted to the engine body. For example, the support plate is used for matching an attachment position of the protector to a position of the vehicle-component attachment portion.

In this attachment structure, the support plate is mounted to the vehicle body frame by inserting a bolt into a first insertion hollow of the support plate and screwing the bolt into a female screw portion of the vehicle body frame. The protector is mounted to the support plate by screwing a bolt into the second insertion hollow of the support plate and screwing the bolt into a nut.

The conventional protector of the motorcycle is provided on the vehicle body frame on upper side of the axis center of the seat rail and extends diagonally upward toward the front of the vehicle body. In this case, traveling comfort of the motorcycle may reduce because lift force acts on the protector while the motorcycle is traveling.

The conventional protector of the motorcycle is mounted to the vehicle body frame via the attachment structure. For example, the support plate is provided in order to look as if an attachment portion of the protector overlaps an engine attachment portion (the vehicle-component attachment portion) in a vehicle side view. In this case, the protector is mounted to the vehicle body frame via the support plate. Thus, in the conventional protector of the motorcycle, operation process for mounting the protector to the vehicle body frame and removing the protector from the vehicle body frame may increase.

An object of the present invention is to provide an engine protector of a straddled vehicle and straddled vehicle with an engine protector which is capable of improving traveling comfort of the straddled vehicle. According to the present invention said object is solved by an engine protector according to the subject matter of the independent claims 1, 13, 15 or 18. Moreover, said object is solved by a straddled vehicle according to claim 19. Preferred embodiments are laid down in the dependent claims. Furthermore, in consideration of the present invention it is provided the engine protector of the straddled vehicle which is easily detachable.

An engine protector of a straddled vehicle according to one aspect is used for protecting an engine mounted to a frame of the straddled vehicle. The engine protector of the straddled vehicle includes a protector portion and a first mounting portion. The protector portion is disposed on an outer side than the engine in a vehicle width direction. The protector portion is disposed along a direction in which a seat rail of the frame extends in a vehicle side view. The protector portion is connected to the first mounting portion. The first mounting portion is mounted to an attached portion of the frame. The engine is mounted to the attached portion.

An engine protector of a straddled vehicle according to another aspect includes a protector portion and a mounting portion. The protector portion is configured to protect an engine. The mounting portion includes a cylindrical portion and a clamp structure. The cylindrical portion is mounted to the frame. The clamp structure is disposed inside the cylindrical portion. The protector portion is mounted to the clamp structure.

An engine protector of a straddled vehicle according to another aspect is used for protecting an engine of the straddled vehicle. The engine protector of the straddled vehicle includes a contact portion. The contact portion is configured to contact with a ground surface when the straddled vehicle falls over. The contact portion extends linearly in a first direction in a view from an outside of the straddled vehicle in a vehicle width direction in a state where the contact portion is mounted to a frame.

A seat rail for supporting a seat of the straddled vehicle includes an exposed portion which is exposed to the outside in a state where the seat rail is mounted to the frame. The exposed portion extends linearly in a second direction in a view from the outside of the straddled vehicle in the vehicle width direction. The first direction and the second direction is substantially the same direction in the state where the contact portion is mounted to the frame.

An engine protector of a straddled vehicle according to another aspect is used for protecting an engine of the straddled vehicle.
The engine protector of the straddled vehicle includes a protector portion and a mounting portion. The protector portion is configured to contact with a ground surface when the straddled vehicle falls over. The mounting portion includes a cylindrical portion.

The protector portion includes a first hollow for inserting a connecting screw. The mounting portion is mounted to a frame. The mounting portion further includes a first member and a second member. The first member includes a second hollow for inserting the connecting screw. The second member includes a screw hollow for allowing the connecting screw to screw. The protector portion is mounted to the frame via the mounting portion by inserting the connecting screw into the first hollow and the second hollow and screwing the connecting screw into the screw hollow;

In a state where the protector portion is mounted to the frame via the mounting portion, the first member includes a first inclined surface which inclines with respect to a direction in which the connecting screw extends. The second member includes a second inclined surface which inclines with respect to the direction in which the connecting screw extends. At least a portion of the first member and at least a portion of the second member are disposed inside the cylindrical portion;

In a state where the protector portion and the second member press the first member by a screwing force of the connecting screw, the protector portion is mounted to the cylindrical portion by causing the first member to press an inner surface of the cylindrical portion with a pressing component force of a pressing force. The pressing force acts from the first inclined surface to the second inclined surface. The pressing component force acts in a direction orthogonal to a direction in which the connecting screw extends.

A straddled vehicle according to another aspect includes the above engine protector.

### ADVANTAGEOUS EFFECTS OF INVENTION

In the present teaching, it is possible to improve traveling comfort of the straddled vehicle with the engine protector of the straddled vehicle. Also, it is possible to easily mount and detach the engine protector of the straddled vehicle. Further, the present teaching can provide a straddled vehicle including an engine protector that can improve traveling comfort of the straddled vehicle and can be easily mounted and detached.

### BRIEF DESCRIPTION OF THE DRAWINGS

FIG. 1 is a left side view of a straddled vehicle according to an embodiment.
FIG. 2 is a front view of the straddled vehicle.
FIG. 3 is a front perspective view of the straddled vehicle.
FIG. 4 is an enlarged perspective view which indicates a mounting state of an engine protector and an engine with respect to a frame body.
FIG. 5 is an enlarged side view of front portions of the engine protector and the seat rail.
FIG. 6 is a cross-sectional view which cuts along a cutting line VI of FIG. 4.
FIG. 7 is a cross-sectional view of a frame body, a first mounting portion, and a protector portion.
FIG. 8 is an enlarged perspective view which indicates the mounting state of the engine protector and the engine with respect to the frame body and is used for explaining a modification relating to the arrangement of the seat rail and the protector portion.
FIG. 9 is a cross-sectional view of the frame body, the first mounting portion, and the protector portion and is used for explaining a modification of a first member of a clamp structure.
FIG. 10 is an enlarged perspective view which indicates the mounting state of the engine protector and the engine with respect to the frame body and is used for explaining a modification of the first protector portion and the second protector portion.
FIG. 11 is a cross-sectional view of the frame body, the first mounting portion, and the protector portion and is used for explaining a configuration of a bottomed cylinder portion in a modified example.

### DETAILED DESCRIPTION OF PREFERRED EMBODIMENTS

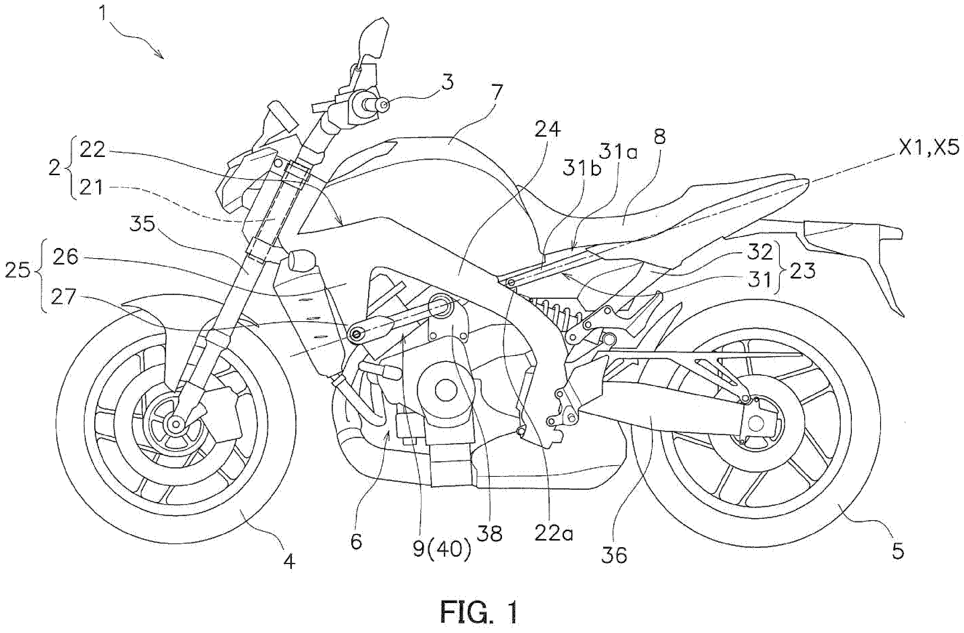

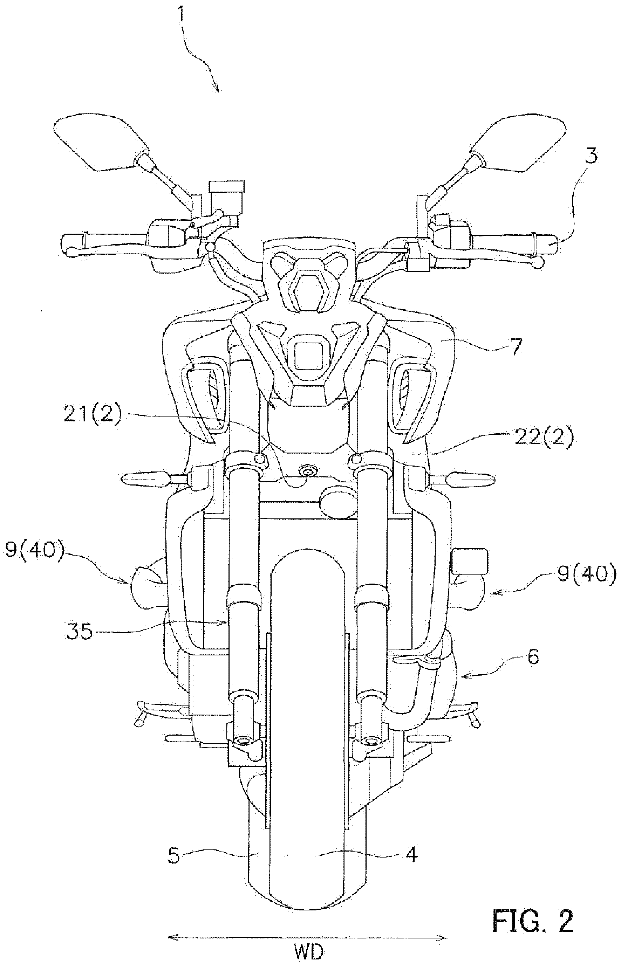

As shown in FIGS. 1 and 2, a straddled vehicle 1 according to the present embodiment includes a frame portion 2, a handle 3, a front wheel 4, a rear wheel 5, an engine 6, a fuel tank 7, and a seat 8 and an engine protector 9.

In this specification, a direction in which the straddled vehicle 1 travels (a leftward direction in FIG. 1) is defined as a forward direction. A direction opposite to the forward direction (a rightward direction in FIG. 1) is defined as a rearward direction. A direction in which gravity acts (a downward direction in FIG. 1) is defined as a downward direction. The direction opposite to the downward direction (a upward direction in FIG. 1) is defined as an upward direction.

In a state where the driver is seated on the seat 8, a driver's right hand side (a left side in FIG. 2) is defined as a right side. A driver's left hand side (a right side in FIG. 2) is defined as a left side. In the following, a vertical direction corresponds to a vehicle height direction. The left-right direction corresponds to a vehicle width direction WD.

The case where the straddled vehicle 1 is viewed from the front side is defined as a vehicle front view. For example, FIG. 2 corresponds to the vehicle front view. The case where the straddled vehicle 1 is viewed from above is defined as a vehicle plan view. The case where the straddled vehicle 1 is viewed from the outside in the vehicle width direction WD, for example, the case where the straddled vehicle 1 is viewed from the right side or the left side, is defined as a vehicle side view. For example, FIG. 1 corresponds to the vehicle side view when the straddled vehicle 1 is viewed from the left side.

### (Handle)

As shown in FIGS. 1 and 2, the handle 3 is disposed above the head pipe 21. For example, the handle 3 is disposed at an interval from the upper end of the head pipe 21. The handle 3 is connected to the steering device 35. For example, the handle 3 is connected to the steering device 35 so that the handle 3 rotates integrally with the steering device 35.

### (Front and rear wheels)

As shown in FIGS. 1 and 2, the front wheel 4 is rotatably supported by the steering device 35. The steering device 35 is rotatably supported by the head pipe 21. As shown in FIG. 1, the rear wheel 5 is rotatably supported by the swing arm 36. The swing arm 36 is rotatably supported by the engine 6 or a frame body 22. In this embodiment, the swing arm 36 is rotatably supported by the frame body 22.

### (Engine)

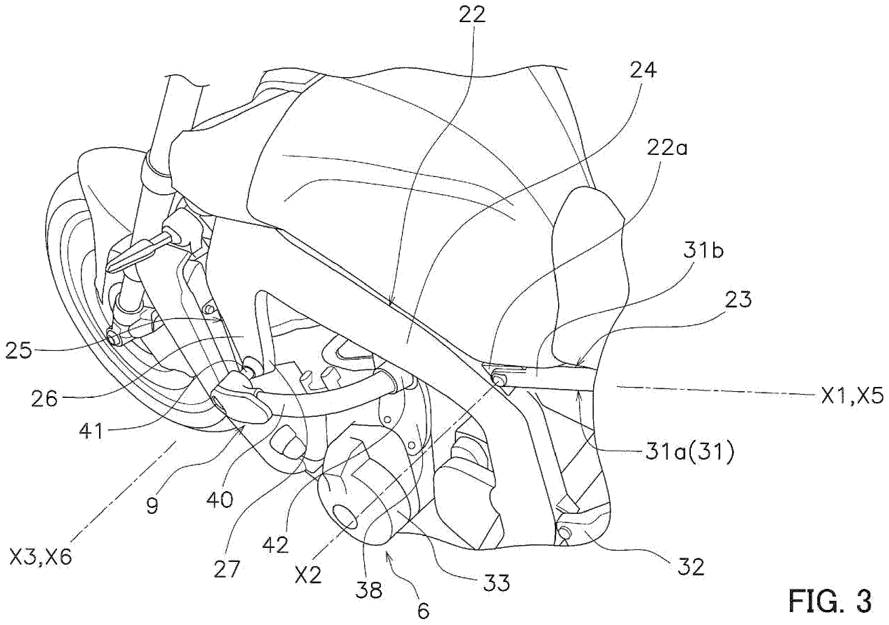

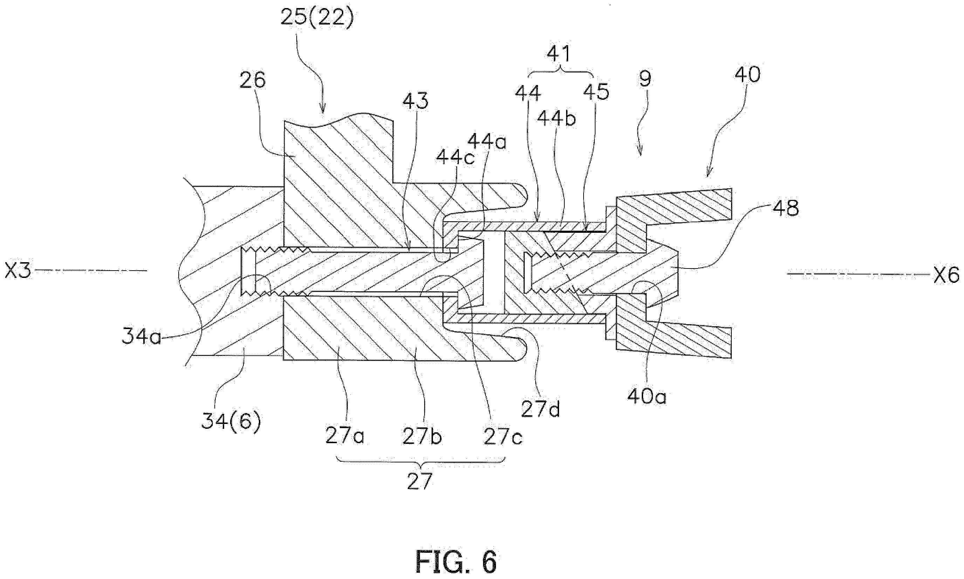

As shown in FIG. 1, the engine 6 is disposed below the frame body 22. The engine 6 is mounted to the frame body 22. For example, the engine 6 is mounted to the frame body 22 via a first screw 43 (see FIG. 6). The first screw 43 is described later. Specifically, as shown in FIG. 3, the engine 6 includes an engine body 33 and a mounting portion 34 (see FIG. 4). The engine body 33 is a drive source of the straddled vehicle 1. The mounting portion 34 is fixed to the engine body 33. As shown in FIG. 6, the first screw 43, which passes through the down frame 25 is inserted, is screwed into the mounting portion 34. In other words, the engine 6 is mounted to the down frame 25 via the first screw 43.

### (Fuel tank and seat)

The fuel tank 7 supplies fuel to the engine 6. As shown in FIG. 1, the fuel tank 7 is disposed behind the head pipe 21. The fuel tank 7 is mounted to an upper portion of the frame body 22 (an upper portion of a main frame 24 described later). For example, the fuel tank 7 is disposed above the frame body 22. The seat 8 is disposed behind the fuel tank 7. The seat 8 is mounted to the upper portion of the frame body 22 (the upper portion of the main frame 24 described later).

### (Frame portion)

As shown in FIG. 1, the frame portion 2 includes a head pipe 21, the frame body 22 (an example of a frame), and a seat supporting portion 23. The head pipe 21 rotatably supports the steering device 35.

The frame body 22 is connected to the head pipe 21. The frame body 22 includes the main frame 24 and a down frame 25. The main frame 24 extends rearward from the head pipe 21. The main frame 24 supports the head pipe 21. The main frame 24 is disposed between the engine 6 and the fuel tank 7.

The down frame 25 is connected to the main frame 24. For example, the down frame 25 extends downward from the main frame 24. The down frame 25 is formed integrally with the main frame 24. The engine 6 is mounted to the down frame 25.

As shown in FIG. 1, the down frame 25 includes a down frame body 26 and an attached portion 27. The down frame body 26 extends downward from the main frame 24. The down frame body 26 is formed integrally with the main frame 24.

As shown in FIGS. 1 and 3, the attached portion 27 is provided on the down frame body 26. For example, the attached portion 27 is provided on a distal end portion of the down frame body 26. The attached portion 27 is disposed between the engine 6 and a first mounting portion 41 (described later) of the engine protector 9 in the vehicle width direction WD.

As shown in FIG. 4, the mounting portion 34 of the engine 6 is mounted to the attached portion 27. The first mounting portion 41 of the engine protector 9 is mounted to the attached portion 27.

As shown in FIG. 6, the attached portion 27 includes a first portion 27a, a second portion 27b, and a hollow portion 27c. The first portion 27a is formed integrally with the down frame body 26. The engine 6 is disposed so as to face the first portion 27a. Specifically, the mounting portion 34 of the engine 6 is disposed so as to face the first portion 27a.

The second portion 27b is formed integrally with the first portion 27a. The second portion 27b is a boss portion which protrudes from the first portion 27a. The engine protector 9 is mounted to the second portion 27b. The second portion 27b includes a recess 27d. For example, the recess 27d is a hollow portion which is formed by being recessed from a distal end of the second portion 27b. The first mounting portion 41 of the engine protector 9 is disposed in the recess 27d.

The hollow portion 27c penetrates the first portion 27a and the second portion 27b. For example, the hollow portion 27c penetrates the first portion 27a and the second portion 27b from an outer surface of the second portion 27b toward an outer surface of the first portion 27a. Specifically, the hollow portion 27c penetrates the first portion 27a and the second portion 27b from a bottom surface of the recess 27d toward the outer surface of the first portion 27a. The first screw 43 is disposed in the hollow portion 27c. The first screw 43 connects the first mounting portion 41 and the engine 6.

As shown in FIGS. 1 and 3, the seat supporting portion 23 supports the seat 8. The seat supporting portion 23 is connected to the frame body 22. The seat supporting portion 23 is fixed to the frame body 22 by a fixing mean such as a fixing screw.

The seat supporting portion 23 includes a pair of seat rails 31 and a pair of rear rails 32. Each of the seat rails 31 supports the seat 8. Each of the seat rails 31 is disposed below the seat 8. Each of the seat rails 31 is mounted to the frame body 22 (the main frame 24). Each of the seat rails 31 extends rearward from the frame body 22 along the seat 8. Each of the seat rails 31 is a hollow member or a rod member.

The front portion 31a of each of the seat rails 31 linearly extends rearward and upward in the vehicle side view. For example, the front portion 31a of each of the seat rails 31 includes an axis center X1. In the vehicle side view, the axis center X1 extends in a direction away from the frame body 22. In this embodiment, the axis center X1 linearly extends rearward and upward in the vehicle side view.

Specifically, in the vehicle side view, the front portion 31a of each of the seat rails 31 extends linearly in the rail axial direction (an example of a second direction) in which the axis center X1 extends. For example, in a vehicle side view, the front portion 31a of each of the seat rails 31 extends linearly from a mounting portion 22a of the frame body 22, to which each of the seat rails 31 is mounted, in the rail axial direction.

The front portion 31a of each of the seat rails 31 includes an exposed portion 31b. The exposed portion 31b is a portion which is exposed to the outside. For example, in a state where the seat supporting portion 23 is mounted to the frame body 22, the exposed portion 31b is exposed to the outside. Specifically, the exposed portion 31b is exposed to the outside in the vehicle side view in a state where each of the seat rails 31 is mounted to the frame body 22. The exposed portion 31b extends linearly in the rail axis direction in which the axis center X1 extends.

As shown in FIG. 1, in the vehicle side view, the axis center X1 passes through the mounting portion 22a of the frame body 22 to which the seat rails 31 are mounted. In the vehicle side view, the axis center X1 passes through the first mounting portion 41 and a second mounting portion 42 (described later).

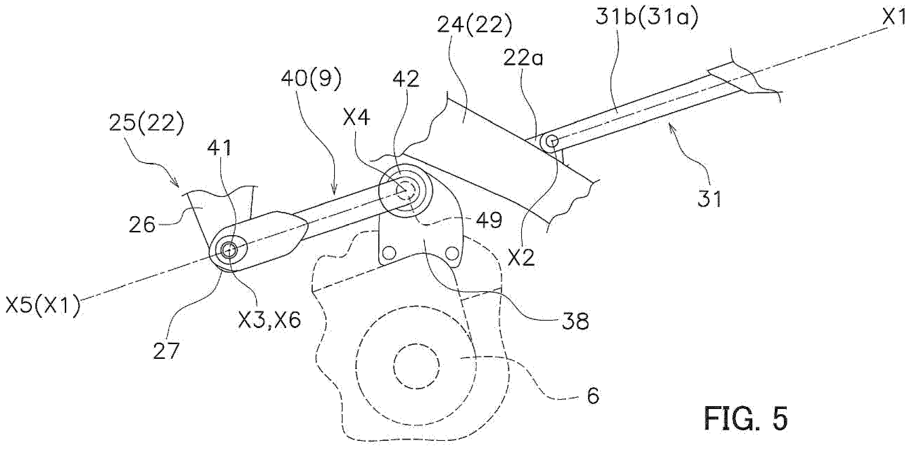

For example, as shown in FIG. 5, in the vehicle side view, the axis center X1 preferably passes through a screw axis center X2 of a screw for mounting each of the seat rails 31 on the mounting portion 22a of the frame body 22. In the vehicle side view, the axis center X1 preferably passes through an axis center X3 of the first screw 43 and an axis center X4 of a second screw 49.

As shown in FIG. 1, the rear rails 32 support the seat rails 31 with respect to the main frame 24. The rear rails 32 is provided on the seat rails 31 respectively. The rear rails 32 are integrally formed with the seat rails 31. The rear rails 32 may be formed separately from the seat rails 31. For example, one end of each of the rear rails 32 is provided on each of the seat rails 31. The other end of each of the rear rails 32 is fixed to the frame body 22 by a fixing mean such as a bolt.

### (Engine protector)

The engine protector 9 is used for protecting the engine 6. The engine protector 9 is mounted to the frame body 22.

As shown in FIGS. 3 and 5, the engine protector 9 includes a protector portion 40 (an example of a contact portion), the first mounting portion 41 (an example of a mounting portion), and the second mounting portion 42.

### -Protector portion-

The protector portion 40 protects the engine 6. For example, the protector portion 40 contacts with a ground surface when the straddled vehicle 1 falls over, and protects the engine 6.

As shown in FIG. 2, the protector portion 40 is disposed on an outer side than the engine6 in the vehicle width direction WD. As shown in FIG. 5, the protector portion 40 is disposed along a direction in which the front portion 31a of the seat rail 31 extends in the vehicle side view. The direction corresponds to the rail axial direction in which the axis center X1 extends.

The protector portion 40 includes an axis center X5. In the vehicle side view, the protector portion 40 extends in a protector axial direction (an example of a first direction) in which the axis center X5 extends. The axis center X5 passes through the axis center X3 of the first screw 43 and the axis center X4 of the second screw 49.

As shown in FIG. 4, the protector portion 40 includes a first protector portion 141 and a second protector portion 142. The first protector portion 141 is hatched on FIG. 4. The first protector portion 141 is provided on the first mounting portion 41. The first protector portion 141 is formed of resin. The first protector portion 141 may be formed of aluminum alloy.

The second protector portion 142 is separate from the first protector portion 141. The second protector portion 142 is connected to the first protector portion 141. The second protector portion 142 is formed of aluminum alloy. The second protector portion 142 may be formed of resin. The second protector portion 142 is preferably formed by a hollow member or a rod member.

In this embodiment, an example, in which the protector portion 40 includes two members (the first protector portion 141 and the second protector portion 142), is described. But the protector portion 40 may be a single member. In this case, the protector portion 40 is preferably formed by a hollow member or a rod member. The protector portion 40 is preferably formed of at least one of resin and aluminum alloy.

As shown in FIG. 1, the protector portion 40 extends linearly in the protector axial direction (the direction of the axis center X5) in a vehicle side view in a state where the protector portion 40 is mounted to the frame body 22. The protector axial direction (the direction of the axis center X5) is substantially the same as the rail axial direction (the direction of the axis center X1). In this embodiment, the protector axial direction and the rail axial direction are defined on substantially the same straight line.

As shown in FIG. 3, the protector portion 40 is mounted to the engine 6 via the first mounting portion 41 and the second mounting portion 42. One end of the protector portion 40 is mounted to the first mounting portion 41.

For example, as shown in FIG. 6, the protector portion 40 includes a first hollow 40a for inserting a connecting screw 48 (described later). The first hollow 40a is provided on the one end of the protector portion 40. The one end of the protector portion 40 is mounted to the first mounting portion 41 by inserting the connecting screw 48 into the first hollow 40a and screwing the connecting screw 48 into the first mounting portion 41. The second mounting portion 42 is provided on the other end of the protector portion 40 (see FIG. 5).

### -First mounting portion-

The first mounting portion 41 is used for mounting the protector portion 40 to the frame body 22. As shown in FIGS. 4 and 5, a protector portion 40 is connected to the first mounting portion 41. For example, the first mounting portion 41 is provided on one end of the protector portion 40. As shown in FIG. 6, the protector portion 40 is mounted to the first mounting portion 41 by the connecting screw 48.

As shown in FIGS. 4 and 5, the first mounting portion 41 is mounted to the frame body 22. For example, as shown in FIG. 6, the first mounting portion 41 is mounted to the frame body 22 via the first screw 43. Specifically, the first mounting portion 41 is mounted to the attached portion 27 of the down frame 25 via the first screw 43.

As shown in FIG. 5, the first mounting portion 41 is disposed in front of and below the seat rail 31 in the vehicle side view in a state where the first mounting portion 41 is mounted to the attached portion 27 of the down frame 25. The first mounting portion 41 is disposed in front of and below the second mounting portion 42.

As shown in FIG. 6, the first mounting portion 41 includes a bottomed cylindrical portion 44 (an example of a cylindrical portion) and a clamp structure 45. The bottomed cylindrical portion 44 is mounted to the frame body 22. For example, the bottomed cylindrical portion 44 is mounted to the frame body 22 via the first screw 43. Specifically, the bottomed cylindrical portion 44 is mounted to the attached portion 27 of the down frame 25 via the first screw 43. The bottomed cylindrical portion 44 is preferably formed of resin or aluminum alloy.

The bottomed cylindrical portion 44 includes a bottom portion 44a and a first cylindrical portion 44b. The bottom portion 44a is disposed so as to face the frame body 22, for example, the attached portion 27 of the down frame 25. The bottom portion 44a includes a hollow portion 44c. The first cylindrical portion 44b is formed integrally with the bottom portion 44a.

A head of the first screw 43 contacts with the bottom portion 44a. The first screw 43 is inserted into the hollow portion 44c of the bottom portion 44a and the hollow portion 27c of the attached portion 27. In this state, a male screw portion of the first screw 43 is screwed into a female screw portion 34a of the engine 6, for example, the female screw portion 34a of the mounting portion 34.

As a result, the bottomed cylindrical portion 44 and the engine 6 are mounted to the frame body 22 (the attached portion 27 of the down frame 25) via the first screw 43. In other words, the frame body 22 (the attached portion 27 of the down frame 25) supports the bottomed cylindrical portion 44 and the engine 6 in a state where the bottomed cylindrical portion 44 is fixed to the engine 6 by the first screw 43.

As shown in FIG. 6, the clamp structure 45 is disposed inside the bottomed cylindrical portion 44. For example, the clamp structure 45 is mounted to the bottomed cylindrical portion 44 in a state where the clamp structure 45 is disposed inside the bottomed cylindrical portion 44. The protector portion 40 is connected to the clamp structure 45.

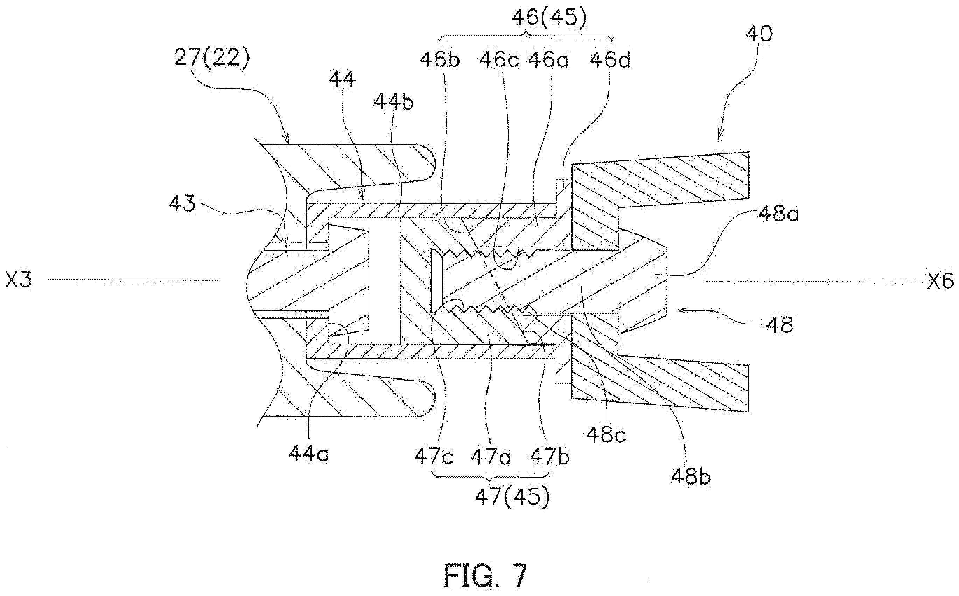

As shown in FIG. 7, the clamp structure 45 includes a first member 46, a second member 47, and the connecting screw 48. The first member 46 is disposed on an opening side of the bottomed cylindrical portion 44. At least a portion of the first member 46 is disposed inside the bottomed cylindrical portion 44.

The first member 46 includes a first body portion 46a, a first inclined surface 46b, a second hollow 46c, and a flange portion 46d. The first body portion 46a is formed substantially in a columnar shape. The first body portion 46a is disposed inside the bottomed cylindrical portion 44. Specifically, the first body portion 46a is disposed inside the bottomed cylindrical portion 44, except for a portion where the flange portion 46d is formed on the first body portion 46a. The first body portion 46a contacts with the protector portion 40. The first body portion 46a is preferably formed of aluminum alloy or steel material.

The first inclined surface 46b forms an end surface of the first body portion 46a. The first inclined surface 46b is inclined with respect to a direction in which the connecting screw 48 extends. Specifically, the first inclined surface 46b is inclined with respect to an axis center X6 of the connecting screw 48. The first inclined surface 46b is disposed at an interval from the bottom portion 44a of the bottomed cylindrical portion 44.

The second hollow 46c is used for inserting the connecting screw 48. The second hollow 46c is provided on the first body portion 46a. The second hollow 46c penetrates the first body portion 46a from the first inclined surface 46b toward an opposite end surface. An inner diameter of the second hollow 46c is larger than an outer diameter of a shaft portion 48b of the connecting screw 48. A gap is provided between the inner surface of the second hollow 46c and the shaft portion 48b of the connecting screw 48.

The flange portion 46d is integrally formed on an outer peripheral surface of the first body portion 46a. The flange portion 46d protrudes in an annular shape from the outer peripheral surface of the first body portion 46a. The flange portion 46d is disposed between the bottomed cylindrical portion 44 and the protector portion 40. Specifically, the flange portion 46d contacts with the end portion of the bottomed cylindrical portion 44 (the end portion of the first cylindrical portion 44b) and the protector portion 40.

The second member 47 is disposed on a bottom portion side of the bottomed cylindrical portion 44. At least a portion of the second member 47 is disposed inside the bottomed cylindrical portion 44. Specifically, the second member 47 is disposed inside the bottomed cylindrical portion 44.

As shown in FIG. 7, the second member 47 includes a second body portion 47a, a second inclined surface 47b, and a screw hollow 47c. The second body portion 47a is formed substantially in a columnar shape. The second body portion 47a is disposed inside the bottomed cylindrical portion 44. Specifically, the second body portion 47a is disposed between the first body portion 46a and the bottom portion 44a of the bottomed cylindrical portion 44.

The second inclined surface 47b forms an end surface of the second body portion 47a. The second inclined surface 47b is inclined with respect to the direction in which the connecting screw 48 extends. Specifically, the second inclined surface 47b is inclined with respect to the axis center X6 of the connecting screw 48.

The second inclined surface 47b is disposed so as to face the first inclined surface 46b. The second inclined surface 47b contacts with the first inclined surface 46b. The connecting screw 48 is screwed into the screw hollow 47c. The screw hollow 47c is a female screw portion into which a male screw portion 48c of the connecting screw 48 is screwed. The screw hollow 47c is formed in a concave shape which is recessed from the second inclined surface 47b toward an opposite end surface. The screw hollow 47c is formed in the second body portion 47a so that the axis center X6 of the connecting screw 48 is substantially coaxial with the axis center X3 of the first screw 43.

The connecting screw 48 connects the protector portion 40, the first member 46, and the second member 47. The connecting screw 48 is screwed into the second member 47 so that the first inclined surface 46b presses the second inclined surface 47b. For example, in a state where the first inclined surface 46b contacts with the second inclined surface 47b, the connecting screw 48 is inserted into the first hollow 40a of the protector portion 40 and the second hollow 46c of the first member 46 and is screwed into the screw hollow 47c. The connecting screw 48 includes the axis center X6.

The connecting screw 48 includes a head portion 48a, the shaft portion 48b, and the male screw portion 48c. The head portion 48a contacts with the outer surface of the protector portion 40. The shaft portion 48b is inserted into the first hollow 40a of the protector portion 40 and the second hollow 46c of the first member 46. The male screw portion 48c is screwed into the screw hollow 47c of the second member 47. In this state, the connecting screw 48 is tightened.

Thus, the protector portion 40 is mounted to the frame body 22 via the first mounting portion 41 by inserting the connecting screw 48 into the first hollow 40a and the second hollow 46c and screwing the connecting screw 48 into the screw hollow 47c.

Specifically, the connecting screw 48 is tightened in a state where the bottomed cylindrical portion 44 is mounted to the frame body 22 (the attached portion 27 of the down frame 25). Thereby, the first member 46 is pressed by the protector portion 40 and the second member 47. As a result, the first inclined surface 46b of the first member 46 moves along the second inclined surface 47b of the second member 47, and the outer peripheral surface of the first body portion 46a of the first member 46 presses an inner peripheral surface of the bottomed cylindrical portion 44. Thus, the protector portion 40 is mounted to the bottomed cylindrical portion 44 by tightening the connecting screw 48, via the first member 46, the second member 47, and the connecting screw 48.

In other words, in a state where the bottomed cylindrical portion 44 is fixed to the engine 6 by the first screw 43, the protector portion 40 and the second member 47 press the first member 46 by a screwing force of the connecting screw 48. In this state, a pressing component force is generated in a direction orthogonal to the direction in which the connecting screw 48 extends (the axis center X6 of the connecting screw 48), by a pressing force which acts from the first inclined surface 46b to the second inclined surface 47b. This pressing component force causes the first member 46 to press the inner peripheral surface of the bottomed cylindrical portion 44. Thus, the protector portion 40 is mounted to the bottomed cylindrical portion 44 via the first member 46, the second member 47, and the connecting screw 48.

In this embodiment, the bottomed cylindrical portion 44 is mounted to the frame body 22 (the attached portion 27 of the down frame 25). The protector portion 40 is mounted to the frame body 22 (the attached portion 27 of the down frame 25) via the first mounting portion 41, for example, the bottomed cylindrical portion 44 and the clamp structure 45 (the first member 46, the second member 47, and the connecting screw 48).

### -Second mounting portion-

The second mounting portion 42 is used for mounting the protector portion 40 on the engine 6. As shown in FIGS. 3 and 5, the second mounting portion 42 is provided on the protector portion 40. For example, the second mounting portion 42 is provided on the protector portion 40 at a position different from a position of the first mounting portion 41. Specifically, the second mounting portion 42 is provided on the other end of the protector portion 40.

As shown in FIG. 3, the second mounting portion 42 is mounted to the engine 6 via a mounting member 38. As shown in FIG. 5, the second mounting portion 42 is disposed so as to face the mounting member 38 in the vehicle width direction WD. The second mounting portion 42 is mounted to the mounting member 38 by the second screw 49. The mounting member 38 is fixed to the engine 6.

The second mounting portion 42 is disposed in front of and below the seat rail 31 in the vehicle side view in a state where the second mounting portion 42 is mounted to the engine 6. For example, in the vehicle side view, the second mounting portion 42 is disposed between the first mounting portion 41 and above the first mounting portion 41 and below the seat rail 31.

Specifically, the second screw 49 includes the axis center X4. In the vehicle side view, the axis center X4 is disposed in front of and below the screw axis center X2 of the screw for mounting each of the seat rails 31 on the frame body 22. The axis center X4 is disposed between the axis center X3 of the first screw 43 and the screw axis center X2 and above the axis center X3 of the first screw 43 and below the screw axis center X2 of the screw. The axis center X4 is disposed between the axis center X6 of the connecting screw 48 and the screw axis center X2 and above the axis center X6 and below the screw axis center X2.

### (Variations of the embodiment)

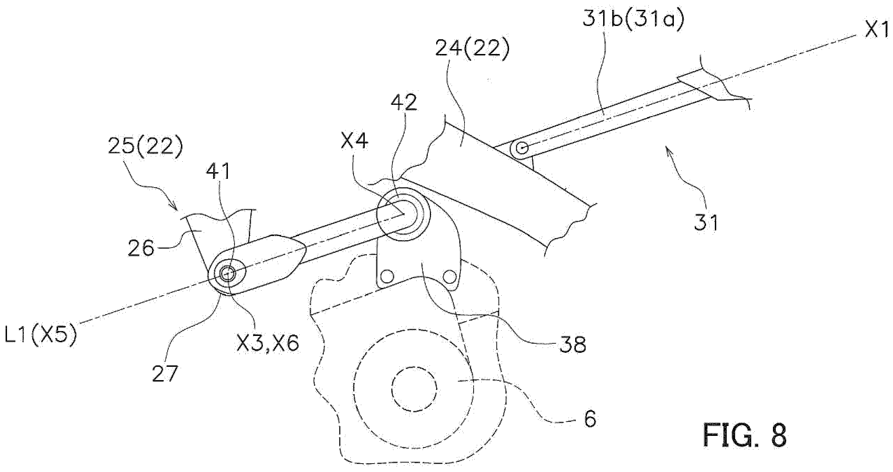

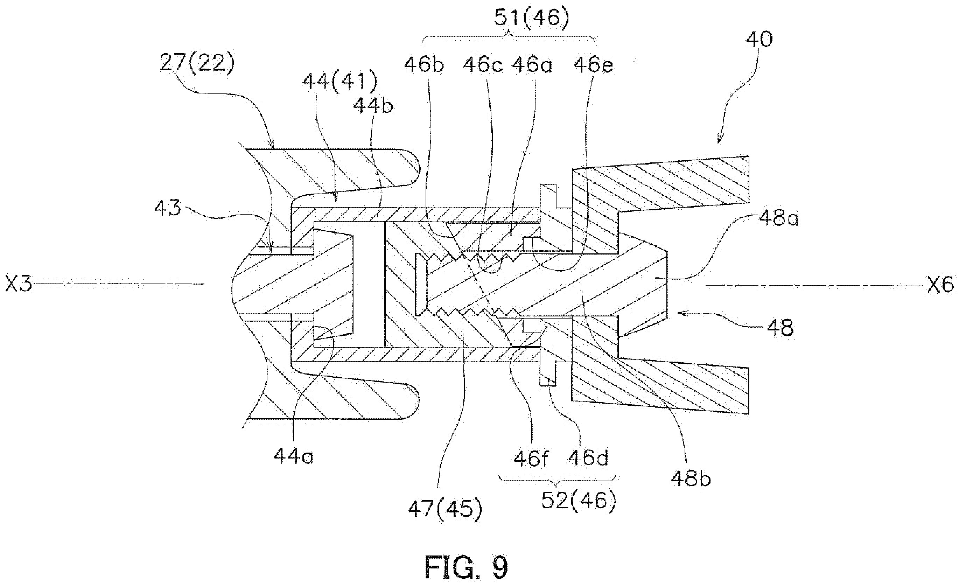

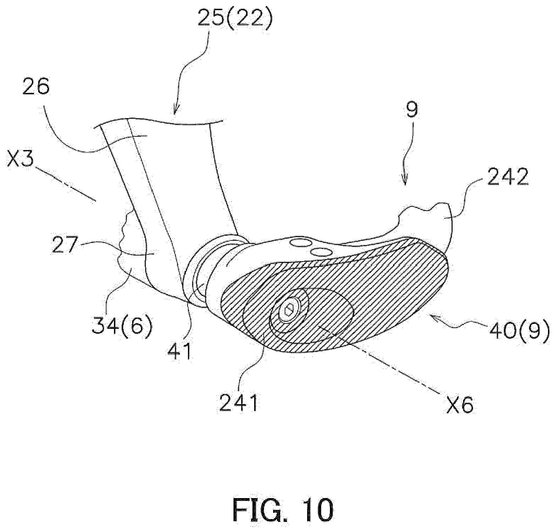

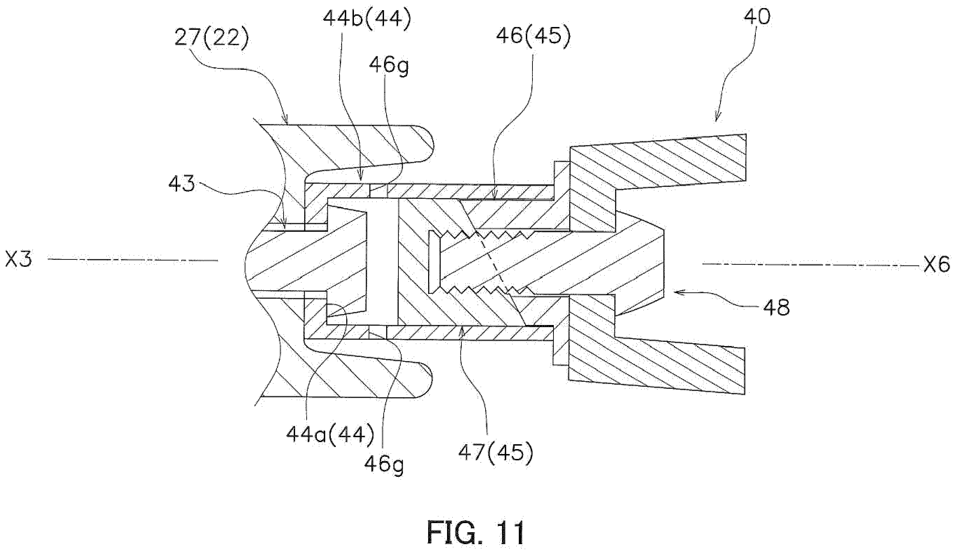

(A1) In the above embodiment, an example, in which the axis center X1 of the seat rail 31 (the front portion 31a of the seat rail 31; the exposed portion 31b) passes through the axis center X3 of the first screw 43 (the axis center X6 of the connecting screw 48) and the axis center X4 of the second screw 49 in the vehicle side view, is described.
   As shown in FIG. 8, in the vehicle side view, the axis center X1 of the seat rail 31 (the front portion 31a of the seat rail 31; the exposed portion 31b) may be parallel to a straight line L1 (or the axis center X5 of the protector portion 40). The straight line L1 (or the axis center X5 of the protector portion 40) passes through the axis center X3 of the first screw 43 (the axis center X6 of the connecting screw 48) and the axis center X4 of the second screw 49.
(A2) In the above embodiment, an example, in which the first member 46 is a single member, is described. Instead of this configuration, as shown in FIG. 9, the first member 46 may include a plurality of members. In this case, the first member 46 includes a shaft member 51 and a lid member 52.
   The shaft member 51 is disposed inside the first cylindrical portion 44b of the first mounting portion 41 (the bottomed cylindrical portion 44). The shaft member 51 includes the first body portion 46a, the first inclined surface 46b, and the second hollow 46c. The shaft member 51 further includes a third hollow 46e. A diameter of the third hollow 46e is larger than a diameter of the second hollow 46c.
   The lid member 52 is separate from the shaft member 51. The lid member 52 is disposed between the protector portion 40 and the shaft member 51. The lid member 52 includes a second cylindrical portion 46f and the flange portion 46d. The second cylindrical portion 46f contacts with the protector portion 40 and the shaft member 51. The flange portion 46d is provided on an outer peripheral portion of the second cylindrical portion 46f.
   One end of the second cylindrical portion 46f is disposed in the third hollow 46e. The other end of the second cylindrical portion 46f contacts with the protector portion 40. The shaft portion 48b of the connecting screw 48 is disposed in inner peripheral portions of the second hollow 46c and the second cylindrical portion 46f. Since the other configuration is the same as one of the above-described embodiment, description of the other configuration will be omitted. The clamp structure 45 can function, even if the first member 46 includes these configurations.
(A3) In the above embodiment, an example, in which the first protector portion 141 is provided on the first mounting portion 41, is described. Instead of this configuration, as shown in FIG. 10, a second protector portion 242 may be provided on the first mounting portion 41. The first protector portion 241 is hatched on FIG. 10. In this case, the first protector portion 241 covers an end portion of the second protector portion 242. The first protector portion 241 and the second protector portion 242 are provided with the first hollow 40a (see FIG. 6).
(A4) The bottomed cylindrical portion 44 of the above embodiment may be configured as shown in FIG. 11. In this case, the bottomed cylindrical portion 44 further includes at least one hollow portion 46g. The at least one hollow portion 46g penetrates the first cylindrical portion 44b from the inner peripheral surface of the first cylindrical portion 44b to the outer peripheral surface of the first cylindrical portion 44b.

For example, a plurality of hollow portions 46g are provided on the first cylindrical portion 44b at intervals in a circumferential direction. Thereby, the strength of the first cylindrical portion 44b is reduced by providing the hollow portions 46g on the first cylindrical portion 44b. As a result, when the protector portion 40 contacts with the ground surface, the first cylindrical portion 44b is deformed and transmission of an external force to the frame portion 2 can be reduced.

### (Summary)

The straddled vehicle 1 includes the engine protector 9. The protector portion 40 of the engine protector 9 is disposed along the direction in which the seat rail 31 of the frame body 22 extends in the vehicle side view. Thereby, it is possible to reduce generation of lift force which acts on the protector portion 40 while the straddled vehicle 1 is traveling. In other words, the traveling comfort of the straddled vehicle 1 can be improved.

Also, the first mounting portion 41 of the engine protector 9 is mounted to the attached portion 27 of the frame body 22 to which the engine 6 is mounted. Thereby, the protector portion 40 can be easily mounted to and detached from the frame body 22 via the first mounting portion 41.

Also, the first mounting portion 41 of the engine protector 9 includes the bottomed cylindrical portion 44 mounted to the frame body 22 and the clamp structure 45 on which the protector portion 40 is mounted. Thereby, the protector portion 40 can be easily mounted to and detached from the frame body 22 via the first mounting portion 41.

Also, the protector portion 40 of the engine protector 9, which functions as a contact portion that contacts with the ground surface when the straddled vehicle 1 falls over, extends linearly in the protector axial direction in the vehicle side view.

The exposed portion 31b of the seat rail 31 extends linearly in the rail axis direction in the vehicle side view. The protector axial direction and the rail axial direction are substantially the same direction. Thereby, it is possible to reduce the generation of the lift force which acts on the protector portion 40 while the straddled vehicle 1 is traveling. In other words, the traveling comfort of the straddled vehicle 1 can be improved.

Also, the first mounting portion 41 of in the engine protector 9 includes the bottomed cylindrical portion 44, the first member 46, the second member 47, and the connecting screw 48. The protector portion 40 and the second member 47 press the first member 46 by the screwing force of the connecting screw 48, in a state where the protector portion 40 mounted to the frame body 22 via the first mounting portion 41.

In this state, a pressing component force is generated in the direction orthogonal to the direction in which the connecting screw 48 extends, by the pressing force which acts from the first inclined surface 46b to the second inclined surface 47b. This pressing component force causes the first member 46 to press the inner peripheral surface of the bottomed cylindrical portion 44.

Thus, the protector portion 40 is mounted to the bottomed cylindrical portion 44 via the first member 46, the second member 47, and the connecting screw 48. Thereby, the protector portion 40 can be easily mounted to and detached from the frame body 22 via the first mounting portion 41 (the bottomed cylindrical portion 44, the first member 46, the second member 47, and the connecting screw 48).

The straddled vehicle 1 includes the above engine protector 9. Thereby, the traveling comfort of the straddled vehicle 1 can be improved. Also, the straddled vehicle 1, on which the engine protector 9 can be easily mounted and detached, is provided.

### INDUSTRIAL APPLICABILITY

The present teaching is applied to an engine protector of a straddled vehicle and a straddled vehicle including the engine protector.

### REFERENCE SIGNS LIST

1 a straddled vehicle
2 a frame portion
6 an engine
9 an engine protector
22 a frame body
24 a main frame
26 a down frame body
27 an attached portion
31 a seat rail
31a a front portion of a seat rail
31b an exposed portion of a seat rail
40 a protector portion
41 a first mounting portion
42 a second mounting portion
43 a first screw
44 a bottomed cylindrical portion
45 a clamp structure
46 a first member
46b a first inclined surface
46c a second hollow
47 a second member
47b a second inclined surface
47c a screw hollow
48 a connecting screw
49 a second screw
X1 an axis center of a seat rail
X2 a screw axis center
X3 an axis center of a first screw
X4 an axis center of a second screw
X5 an axis center of a protector portion
X6 an axis center of a connecting screw

## Claims

1. An engine protector (9) of a straddled vehicle for protecting an engine (6) mounted to a frame (22) of the straddled vehicle, the engine protector (9) of the straddled vehicle comprising:
a protector portion (40) disposed on an outer side than the engine (6) in a vehicle width direction (WD) and disposed along a direction in which a seat rail (31) of the frame (22) extends in a vehicle side view; and
a first mounting portion (41) mounted to an attached portion (27) of the frame (22), the engine (6) mounted to the attached portion (27), the protector portion (40) connected to the first mounting portion (41).

2. The engine protector (9) of the straddled vehicle according to claim 1, further comprising:
a second mounting portion (42) used for mounting the protector portion (40) on the frame (22) and provided on the protector portion (40) at a position which is different from a position of the first mounting portion (41); wherein
the first mounting portion (41) is disposed in front of and below the seat rail (31) in the vehicle side view; and
the second mounting portion (42) is disposed above the first mounting portion (41) and below the seat rails (31) between the first mounting portion (41) and the seat rail (31) in the vehicle side view.

3. The engine protector (9) of the straddled vehicle according to claim 2, wherein a front portion (31a) of the seat rail (31) includes an axis center (X1) which extends in a direction away from the frame (22) in the vehicle side view;
the axis center (X1) passes through the first mounting portion (41) and the second mounting portion (42) in the vehicle side view.

4. The engine protector (9) of the straddled vehicle according to claim 3, wherein the first mounting portion (41) and the engine (6) are mounted to the attached portion (27) via a first screw (43);
the second mounting portion (42) is mounted to the engine (6) via a second screw (49); and
the axis center (X1) passes through an axis center (X3) of the first screw (43) and an axis center (X4) of the second screw (49) in the vehicle side view.

5. The engine protector (9) of the straddled vehicle according to claim 3, wherein the first mounting portion (41) and the engine (6) are mounted to the attached portion (27) via a first screw (43);
the second mounting portion (42) is mounted to the engine (6) via a second screw (49); and
the axis center (X1) is parallel to a line which connects an axis center (X3) of the first screw (43) and an axis center (X4) of the second screw (49) in the vehicle side view.

6. The engine protector (9) of the straddled vehicle according to any one of claims 1 to 5, wherein the protector portion (40) is a single member which is formed of at least one of resin and aluminum alloy.

7. The engine protector (9) of the straddled vehicle according to any one of claims 1 to 5, wherein the protector portion (40) includes a first body portion (46a) and a second body portion (47a);
the first body portion (46a) is provided on the first mounting portion (41) and formed of at least one of resin and aluminum alloy; and
the second body portion (47a) is separate from the first body portion (46a).

8. The engine protector (9) of the straddled vehicle according to any one of claims 1 to 7, wherein the first mounting portion (41) includes a cylindrical portion (44) and a clamp structure (45);
the cylindrical portion (44) is mounted to the attached portion (27);
the protector portion (40) is mounted to the clamp structure (45);
the clamp structure (45) is disposed inside the cylindrical portion (44) and includes a first member (46), a second member (47), and a connecting screw (48);
the first member (46) is disposed on an opening side of the cylindrical portion (44) and includes a first inclined surface (46b);
the second member (47) is disposed on a bottom side of the cylindrical portion (44) and includes a second inclined surface (47b) which contacts with the first inclined surface (46b); and
the connecting screw (48) is inserted into a hollow portion of the first member (46) and is screwed into the second member (47) so that the second inclined surface (47b) presses the first inclined surface (46b).

9. The engine protector (9) of the straddled vehicle according to claim 8, wherein the cylindrical portion (44) and the engine (6) are mounted to the attached portion (27) via a first screw (43).

10. The engine protector (9) of the straddled vehicle according to claim 9, wherein an axis center (X3) of the first screw (43) is coaxial with an axis center (X6) of the connecting screw (48).

11. The engine protector (9) of the straddled vehicle according to any one of claims 8 to 10, wherein the second member (47) includes a female screw portion;
a male screw portion of the connecting screw (48) is screwed into the female screw portion; and
an inner diameter of the hollow portion is larger than an outer diameter of a shaft portion of the connecting screw (48).

12. The engine protector (9) of the straddled vehicle according to any one of claims 1 to 11, wherein the cylindrical portion (44) is formed of resin or aluminum alloy.

13. An engine protector (9) of a straddled vehicle comprising:
a protector portion (40) configured to protect an engine (6); and
a mounting portion (41) including a cylindrical portion (44) and a clamp structure (45);
wherein
the cylindrical portion (44) is mounted to the frame (22);
the clamp structure (45) is disposed inside the cylindrical portion (44); and
the protector portion (40) is mounted to the clamp structure (45).

14. The engine protector (9) of the straddled vehicle according to claim 13, wherein the clamp structure (45) includes a first member (46), a second member (47), and a connecting screw (48);
the first member (46) is disposed on an opening side of the cylindrical portion (44) and includes a first inclined surface (46b);
the second member (47) is disposed on a bottom side of the cylindrical portion (44) and includes a second inclined surface (47b) which contacts with the first inclined surface (46b); and
the connecting screw (48) is inserted into a hollow portion of the first member (46) and is screwed into the second member (47) so that the first inclined surface (46b) presses the second inclined surface (47b).

15. An engine protector (9) of a straddled vehicle for protecting an engine (6) of the straddled vehicle, the engine protector (9) of the straddled vehicle comprising:
a contact portion (40) configured to contact with a ground surface when the straddled vehicle falls over;
the contact portion (40) extends linearly in a first direction (X5) in a view from an outside of the straddled vehicle in a vehicle width direction (WD) in a state where the contact portion (40) is mounted to a frame (22);
a seat rail (31) for supporting a seat (8) of the straddled vehicle includes an exposed portion (31b) which is exposed to the outside in a state where the seat rail (31) is mounted to the frame (22);
the exposed portion (31b) extends linearly in a second direction (X1) in a view from the outside of the straddled vehicle in the vehicle width direction (WD); and
the first direction (X5) and the second direction (X1) is substantially the same direction in the state where the contact portion (40) is mounted to the frame (22).

16. The engine protector (9) of the straddled vehicle according to claim 15, wherein the first direction (X5) and the second direction (X1) are defined on substantially the same straight line.

17. The engine protector (9) of the straddled vehicle according to claim 15 or 16, wherein the contact portion (40) is a hollow member or a rod member; and
the exposed portion (31b) is a hollow member or a rod member.

18. An engine protector (9) of a straddled vehicle for protecting an engine (6) of the straddled vehicle, the engine protector (9) of the straddled vehicle comprising:
a protector portion (40) configured to contact with a ground surface when the straddled vehicle falls over; and
a mounting portion (41) including a cylindrical portion (44);
the protector portion (40) includes a first hollow (40a) for inserting a connecting screw (48);
the mounting portion (41) is mounted to a frame (22) and further includes a first member (46) and a second member (47); the first member (46) includes a second hollow (46c) for inserting the connecting screw (48); the second member (47) includes a screw hollow (47c) for allowing the connecting screw (48) to screw;
the protector portion (40) is mounted to the frame (22) via the mounting portion (41) by inserting the connecting screw (48) into the first hollow (40a) and the second hollow (46c) and screwing the connecting screw (48) into the screw hollow (47c);
in a state where the protector portion (40) is mounted to the frame (22) via the mounting portion, the first member (46) includes a first inclined surface (46b) which inclines with respect to a direction in which the connecting screw (48) extends, the second member (47) includes a second inclined surface (47b) which inclines with respect to the direction in which the connecting screw (48) extends, at least a portion of the first member (46) and at least a portion of the second member (47) are disposed inside the cylindrical portion (44);
in a state where the protector portion (40) and the second member (47) press the first member (46) by a screwing force of the connecting screw (48), the protector portion (40) is mounted to the cylindrical portion (44) by causing the first member (46) to press an inner surface of the cylindrical portion (44) with a pressing component force of a pressing force;
the pressing force acts from the first inclined surface (46b) to the second inclined surface (47b); and
the pressing component force acts in a direction orthogonal to a direction in which the connecting screw (48) extends.

19. A straddled vehicle comprising:
an engine protector (9) according to any one of claims 1 to 18.
